# FASCICULE DE BREVET EUROPEEN

(11) **EP 1 018 293 B1**
(45) Date de publication et mention de la délivrance du brevet: **23.07.2003**
(21) Numéro de dépôt: 99440346.7
(22) Date de dépôt: 07.12.1999
(51) Int. Cl.: A01D 34/66, A01D 67/00

(54) **Faucheuse**
Mähmaschine
Mowing machine

(30) Priorité: 14.12.1998 FR 9815910
(43) Date de publication de la demande: 12.07.2000
(73) Titulaire: KUHN S.A., 67706 Saverne Cedex (FR)
(72) Inventeur: Walch, Martin, 67490 Dettwiller (FR); Wattron, Bernard, 67700 Haegen (FR)

(56) Documents cités:
- DE-A- 2 151 156
- FR-A- 2 110 911
- FR-A- 2 560 484
- FR-A- 2 608 362
- US-A- 3 309 850
- US-A- 4 081 946

## Description

La présente invention concerne une faucheuse comportant :
- un châssis,
- un moyen de liaison permettant de lier ledit châssis à un véhicule moteur,
- au moins un mécanisme de récolte muni d'organes de coupe,
- un dispositif de suspension liant ledit mécanisme de récolte au châssis en autorisant un déplacement en hauteur dudit mécanisme de récolte par rapport audit châssis,
- un dispositif d'allégement associé audit mécanisme de récolte et comportant deux organes élastiquement déformables s'étendant transversalement à la direction d'avance durant le travail, chaque organe élastiquement déformable attaquant par une première de ses extrémités une extrémité correspondante du mécanisme de récolte via un organe de transmission d'effort convertissant l'effort transversal créé par ledit organe élastiquement déformable en un effort dirigé vers le haut au niveau du mécanisme de récolte,
- un dispositif centralisé de réglage de la force d'allégement exercée sur ledit mécanisme de récolte, ledit dispositif étant couplé aux deuxièmes extrémités desdits organes élastiquement déformables.

Il est connu dans l'état de la technique un document **FR 2 110 911** qui décrit une telle faucheuse comportant dans les grandes lignes un châssis, un moyen de liaison permettant de lier ledit châssis à un véhicule moteur, un mécanisme de récolte, un dispositif de suspension liant ledit mécanisme de récolte au châssis, un dispositif d'allégement dudit mécanisme de récolte et un dispositif centralisé de réglage de la force d'allégement exercée sur ledit mécanisme de récolte.

Le dispositif d'allégement est associé au mécanisme de récolte et comporte un vérin hydraulique permettant d'agir sur ce dernier au moyen de deux câbles et d'organes élastiquement déformables de manière à alléger ledit mécanisme de récolte en exerçant sur celui-ci un effort dirigé vers le haut. Chaque câble est en effet associé à un organe élastiquement déformable de sorte à permettre, dans un premier temps, lorsque le vérin hydraulique s'allonge, d'alléger le mécanisme de récolte et, dans un deuxième temps, lorsque ledit vérin hydraulique s'allonge davantage, de soulever ledit mécanisme de récolte.

Cette faucheuse connue présente cependant un certain nombre d'inconvénients.

En effet, le vérin hydraulique est commandé par la centrale hydraulique du véhicule moteur laquelle ne permet pas d'allonger ou de raccourcir ledit vérin hydraulique avec une précision suffisante. En outre, la moindre fuite du vérin hydraulique ou du circuit hydraulique qui le commande, a pour conséquence une variation de longueur de celui-ci, ce qui se traduit par un déréglage de l'allégement du mécanisme de récolte.

Le but de la présente invention est de remédier à ces inconvénients suscités tout en assurant un réglage simple, rapide et fiable de l'allégement du mécanisme de coupe.

A cet effet la faucheuse selon l'invention est caractérisée en ce que le dispositif centralisé de réglage de la force d'allégement exercée sur le mécanisme de récolte comporte un organe de commande rotatif lié au châssis et couplé à chaque deuxième extrémité desdits organes élastiquement déformables via des moyens convertissant la rotation dudit organe de commande rotatif en une action de bandage ou de détente desdits organes élastiquement déformables selon le sens de rotation dudit organe de commande rotatif.

L'invention concerne également les caractéristiques additionnelles suivantes considérées isolément ou dans toutes leurs combinaisons techniquement possibles :
- lesdits moyens convertissant la rotation de l'organe de commande rotatif en une action de bandage ou de détente des organes élastiquement déformables peuvent comporter un axe rotatif de transmission de la commande implanté entre les deuxièmes extrémités des organes élastiquement déformables :

- l'axe rotatif de transmission de la commande et les deux organes élastiquement déformables peuvent s'étendre au moins sensiblement horizontalement :

- l'axe rotatif de transmission de la commande et les deux organes élastiquement déformables peuvent être au moins sensiblement parallèles ;
- en vue suivant un axe longitudinal de l'axe rotatif de transmission de la commande, ledit axe longitudinal et un axe longitudinal médian de chaque organe élastiquement déformable peuvent être disposés suivant les trois sommets d'un triangle au moins sensiblement isocèle ;
- un axe longitudinal de l'axe rotatif de transmission de la commande et un axe longitudinal médian de chaque organe élastiquement déformable peuvent s'étendre au moins sensiblement dans un plan ;
- les moyens convertissant la rotation de l'organe de commande rotatif en une action de bandage ou de détente des organes élastiquement déformables peuvent comporter en sus au moins deux roues dentées cylindriques au niveau de la deuxième extrémité de l'un au moins des organes élastiquement déformables ;
- les moyens convertissant la rotation de l'organe de commande rotatif en une action de bandage ou de détente des organes élastiquement déformables peuvent comporter en sus au moins deux pignons et au moins une chaîne au niveau de la deuxième extrémité de l'un au moins des organes élastiquement déformables ;
- les moyens convertissant la rotation de l'organe de commande rotatif en une action de bandage ou de détente des organes élastiquement déformables peuvent comporter en sus deux organes de liaison à vis et écrou liant chacun la deuxième extrémité de l'organe élastiquement déformable correspondant au châssis ;
- lesdites roues dentées cylindriques au niveau de la deuxième extrémité de l'un au moins des organes élastiquement déformables peuvent coupler l'organe de liaison à vis et écrou correspondant à l'axe rotatif de transmission de la commande :

- lesdits pignons et ladite (lesdites) chaîne(s) au niveau de la deuxième extrémité de l'un au moins des organes élastiquement déformables peuvent coupler l'organe de liaison à vis et écrou correspondant à l'axe rotatif de transmission de la commande ;
- au niveau de la deuxième extrémité de l'un des organes élastiquement déformables peuvent être prévues deux roues dentées cylindriques qui couplent l'organe de liaison à vis et écrou correspondant à l'axe rotatif de transmission de la commande et au niveau de la deuxième extrémité de l'autre organe élastiquement déformable peuvent être prévus deux pignons et une chaîne ou trois roues dentées cylindriques qui couplent l'organe de liaison à vis et écrou correspondant à l'axe rotatif de transmission de la commande ;
- chaque organe de liaison à vis et écrou peut comporter un organe-vis et un organe-écrou, ledit organe-vis ou ledit organe-écrou étant lié au châssis de sorte à pouvoir uniquement tourner ;
- l'organe-vis peut être formé d'une tige filetée qui est guidée en rotation dans le châssis sans possibilité de translation et l'organe-écrou peut être lié à la deuxième extrémité de l'organe élastiquement déformable correspondant ;
- chaque organe élastiquement déformable peut comporter au moins un ressort à boudin cylindrique ;
- ledit (lesdits) ressort(s) à boudin cylindrique(s) peut (peuvent) être un (des) ressort(s) de traction ;
- l'organe-écrou peut être formé d'une noix vissée dans l'extrémité du (de l'un des) ressort(s) à boudin cylindrique(s) de l'organe élastiquement déformable correspondant, ladite noix présentant un trou fileté dans lequel est vissée la tige filetée de l'organe-vis correspondant ;
- l'organe de commande rotatif peut être lié directement à l'axe rotatif de transmission de la commande :

- l'organe de commande rotatif peut comporter un axe de commande rotatif au moins sensiblement colinéaire avec l'axe rotatif de transmission de la commande :

- l'axe de commande rotatif et l'axe rotatif de transmission de la commande peuvent former une seule pièce ;
- l'organe de commande rotatif peut comporter une manivelle s'étendant à l'extérieur du châssis ;
- la manivelle peut s'étendre à l'une des extrémités longitudinales du châssis ;
- la manivelle peut s'étendre, vue dans le sens d'avance durant le travail, à l'extrémité gauche du châssis ;
- chaque organe élastiquement déformable peut attaquer le mécanisme de récolte au moyen d'un basculeur guidé en rotation dans le châssis et auquel est liée directement ou indirectement la première extrémité dudit organe élastiquement déformable, et d'une tringle s'étendant entre le basculeur et l'extrémité correspondante du mécanisme de récolte ;
- le dispositif de suspension liant le mécanisme de récolte au châssis peut comporter notamment deux bielles inférieures articulées chacune entre une extrémité du mécanisme de récolte et le châssis, et chaque tringle peut être articulée sur le mécanisme de récolte en un point de sorte que l'effort de traction exercé par les tringles crée, par rapport à l'articulation des bielles inférieures sur le mécanisme de récolte, un moment qui tend à soulever l'avant du mécanisme de récolte ;
- le châssis peut comporter une partie creuse s'étendant transversalement à la direction d'avance durant le travail et les organes élastiquement déformables peuvent s'étendre au moins sensiblement entièrement à l'intérieur de ladite partie creuse du châssis.

D'autres objets et caractéristiques de l'invention ressortiront de la description ci-après avec référence aux dessins annexés qui représentent, à titre d'exemple non limitatif, une forme de réalisation de la faucheuse selon l'invention.

Sur ces dessins :
- la **figure 1** représente une vue de dessus, partiellement en coupe, d'une faucheuse selon l'invention dans une position de transport ;
- la **figure 2** représente une vue latérale, partiellement en coupe, de la faucheuse de la figure 1 ;
- la **figure 3** représente, selon une vue de dessus, le dispositif d'allégement et le dispositif centralisé de réglage de la force d'allégement exercée sur le mécanisme de récolte de la faucheuse de la figure 1 ;
- la **figure 4** représente, à une autre échelle, une partie de la faucheuse vue suivant la flèche IV représentée sur la figure 1 ;
- la **figure 5** représente, à une autre échelle, une partie de la faucheuse vue suivant la flèche V représentée sur la figure 1 ;
- la **figure 6** représente, à une autre échelle, une partie du dispositif d'allégement et du dispositif centralisé de réglage de la force d'allégement tels que représentés sur la figure 4 ;
- la **figure 7** représente, à une autre échelle, une partie du dispositif d'allégement et du dispositif centralisé de réglage de la force d'allégement tels que représentés sur la figure 5 ;
- la **figure 8** représente un autre exemple de réalisation du dispositif centralisé de réglage de la force d'allégement.

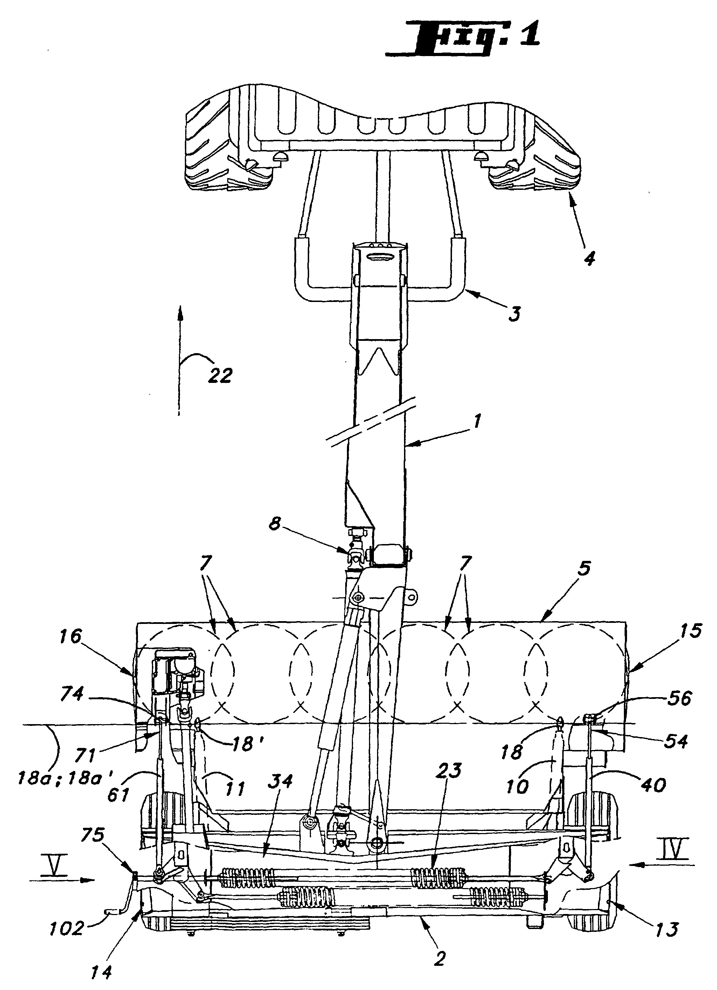

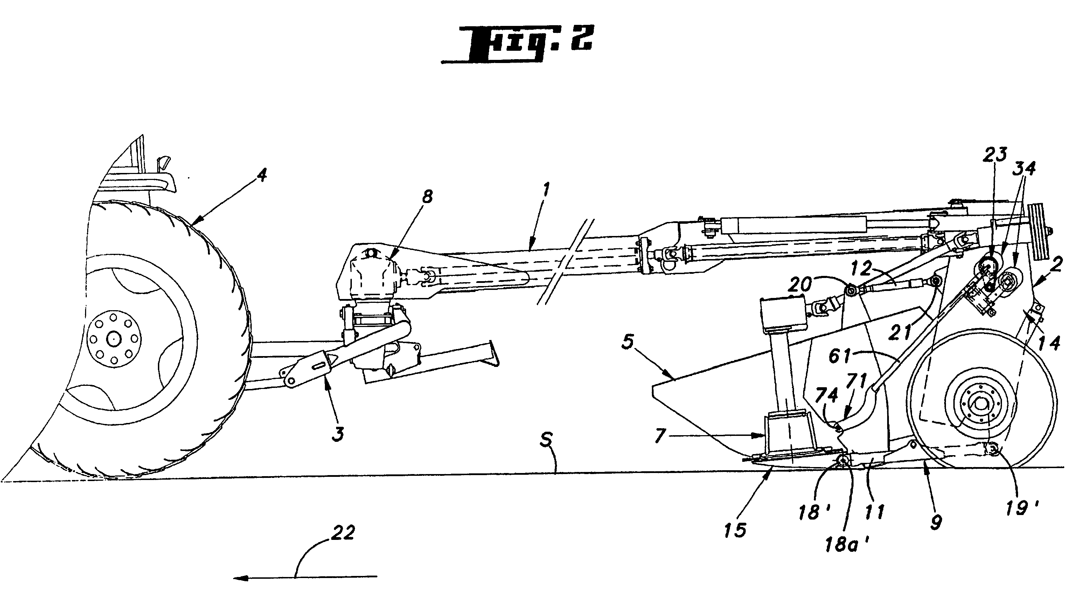

Sur les figures 1 et 2, on voit une faucheuse (1) comportant, dans les grandes lignes, un châssis (2), un moyen de liaison (3) liant ledit châssis (2) à un véhicule moteur (4), et un mécanisme de récolte (5). Ce mécanisme de récolte (5) comporte des organes de coupe (7) lesquels sont destinés à être entraînés en rotation au moyen d'organes de transmission (8). Ce mécanisme de récolte (5) est lié au châssis (2) au moyen d'un dispositif de suspension (9) autorisant un déplacement en hauteur dudit mécanisme de récolte (5) par rapport audit châssis (2). A cet effet, le dispositif de suspension (9) comporte, selon l'exemple de réalisation représenté, une première bielle inférieure (10), une deuxième bielle inférieure (11) et une bielle supérieure (12).

Chaque bielle inférieure (10, 11) est située relativement près du sol (S) et aux alentours d'une extrémité latérale (13, 14) correspondante du châssis (2). Chaque bielle inférieure (10, 11) est articulée entre une extrémité latérale (15, 16) correspondante du mécanisme de récolte (5) et l'extrémité latérale (13, 14) correspondante du châssis (2). A cet effet, chaque bielle inférieure (10, 11) est liée d'une part au mécanisme de récolte (5) au moyen d'une première articulation (18, 18') d'axe longitudinal (18a, 18a') et d'autre part au châssis (2) au moyen d'une deuxième articulation (19,19'). On notera que, selon une vue de dessus, telle que représentée sur la figure 1, les axes longitudinaux (18a, 18a') sont au moins sensiblement confondus et s'étendent sensiblement horizontalement et orthogonalement à la direction d'avance (22).

La bielle supérieure (12) est, quant à elle, articulée entre l'une (16) des extrémités latérales (15, 16) du mécanisme de récolte (5) et l'extrémité latérale (14) correspondante du châssis (2). A cet effet, la bielle supérieure (12) est liée d'une part au mécanisme de récolte (5) au moyen d'une troisième articulation (20) et d'autre part au châssis (2) au moyen d'une quatrième articulation (21).

Dans la suite de la description, les notions suivantes "avant", "arrière", "devant" et "derrière" sont définies par rapport au sens d'avance au travail (22) indiqué par la flèche de la direction d'avance au travail (22) et les notions "droite" et "gauche" sont définies en regardant la faucheuse (1), de l'arrière, dans le sens d'avance au travail (22).

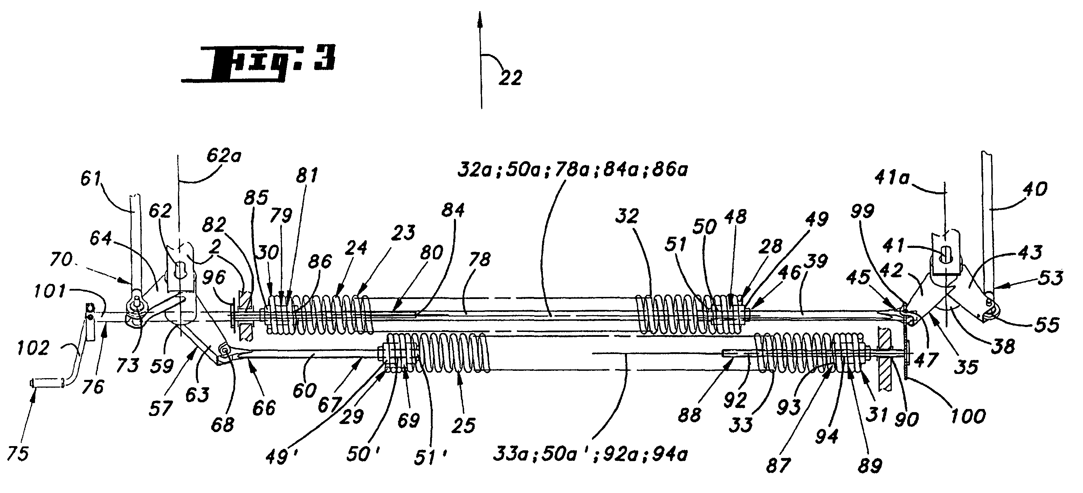

La faucheuse (1) selon la présente invention comporte en sus un dispositif d'allégement (23) qui est associé au mécanisme de récolte (5). A la lumière des figures 3 à 5, on voit que ce dispositif d'allégement (23) comporte un premier organe élastiquement déformable (24) et un deuxième organe élastiquement déformable (25) s'étendant transversalement à la direction d'avance (22) durant le travail. Chacun desdits organes élastiquement déformables (24, 25) comporte une première extrémité (28, 29) et une deuxième extrémité (30, 31).

A la lumière de la figure 3. on voit plus précisément que chaque organe élastiquement déformable (24, 25) comporte un ressort à boudin cylindrique qui est, selon l'exemple de réalisation représenté, un ressort de traction (32, 33) d'axe longitudinal (32a, 33a).

Ces deux ressorts de traction (32, 33) s'étendent sensiblement horizontalement et orthogonalement à la direction d'avance (22) durant le travail. A cet effet, le châssis (2) comporte une partie creuse (34) s'étendant transversalement à la direction d'avance (22) durant le travail et à l'intérieur de laquelle s'étendent les deux ressorts de traction (32, 33).

Une telle implantation desdits ressorts de traction (32, 33) permet avantageusement de ne pas encombrer le dispositif de suspension (9) et d'avoir une faucheuse (1) plus compacte, notamment en ce qui concerne sa largeur hors-tout qui est importante pour le transport sur route. En outre, les ressorts de traction (32, 33) s'étendant à l'intérieur de la partie creuse (34) du châssis (2), ils ne nécessitent pas de capotage spécifique souvent requis par les réglementations en matière de sécurité.

On notera encore que chaque ressort de traction (32, 33) attaque, par sa première extrémité (28, 29), l'extrémité latérale (15, 16) correspondante du mécanisme de récolte (5).

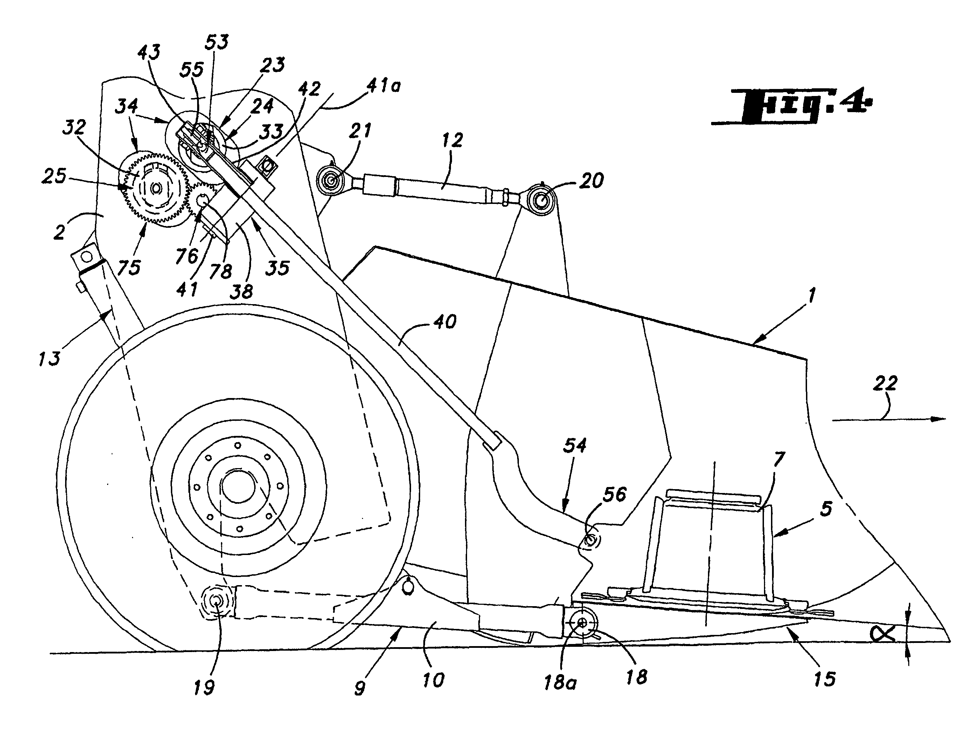

A cet effet, on voit sur la figure 3 que la première extrémité (28) du premier ressort de traction (32) est liée à un premier organe de transmission d'efforts (35) qui convertit l'effort transversal créé par ledit premier ressort de traction (32) en un effort dirigé vers le haut au niveau de l'extrémité droite (15) du mécanisme de récolte (5). A cet effet, le premier organe de transmission d'efforts (35) comporte, selon l'exemple de réalisation représenté, un premier basculeur (38), une première barre (39) et une première tringle (40). Ce premier basculeur (38) est guidé en rotation dans le châssis (2) au moyen d'une cinquième articulation (41) d'axe longitudinal (4 1a) dirigé vers l'avant et vers le haut (figure 4).

Ce premier basculeur (38) est doté d'un premier bras (42) et d'un deuxième bras (43). Ce premier bras (42) s'étend, en position de travail, vers l'arrière et le haut et vers la gauche, alors que le deuxième bras (43) du premier basculeur (38) s'étend, en position de travail, vers l'arrière et le haut et vers la droite. En vue suivant l'axe longitudinal (41a) de la cinquième articulation (41), ces deux bras (42, 43) du premier basculeur (38) forment entre eux un angle aigu. On notera encore que le deuxième bras (43) cst, selon une vue de côté telle que représentée sur la figure 4, sensiblement confondu avec le premier bras (42). On notera enfin encore qu'en position normale de travail, les deux bras (42, 43) du premier basculeur (38) s'étendent, en vue suivant l'axe longitudinal (4 1a) de la cinquième articulation (41) sensiblement symétriquement par rapport à un plan vertical s'étendant suivant la direction de travail (22) et contenant ledit axe longitudinal (41a).

Audit premier bras (42) est liée l'une (45) des extrémités (45, 46) de la première barre (39) au moyen d'une sixième articulation (47) du type rotule dans l'exemple représenté, tandis que l'autre extrémité (46) de la première barre (39) est liée à la première extrémité (28) du premier ressort de traction (32) au moyen d'une première liaison glissière (48). Cette première liaison glissière (48) comporte, selon l'exemple de réalisation représenté, une première noix (49) vissée dans la première extrémité (28) du premier ressort de traction (32), ladite première noix (49) comportant elle-même un trou (50) d'axe longitudinal (50a) sensiblement confondu avec l'axe longitudinal (32a) du premier ressort de traction (32). Au travers de ce trou (50) s'étend l'autre extrémité (46) de la première barre (39) de sorte à autoriser un mouvement relatif entre le premier ressort de traction (32) et ladite première barre (39). On notera cependant qu'il est prévu un premier arrêt (51) à l'autre extrémité (46) de la première barre (39) lequel vient en appui sur la première noix (49) de sorte que le premier ressort de traction (32) puisse agir sur le premier organe de transmission d'efforts (35).

Au deuxième bras (43) est liée l'une (53) des extrémités (53, 54) de la première tringle (40) au moyen d'une septième articulation (55) du type rotule, dans l'exemple représenté, tandis que l'autre extrémité (54) de ladite première tringle (40) est liée à l'extrémité latérale (15) correspondante du mécanisme de récolte (5) au moyen d'une huitième articulation (56) également du type rotule dans l'exemple représenté.

Cette huitième articulation (56) est située de sorte que l'effort de traction exercé par la première tringle (40) crée, sur l'extrémité latérale (15) correspondante du mécanisme de récolte (5), un moment par rapport à l'articulation (18) de la première bielle inférieure (10) qui tend à soulever l'avant dudit mécanisme de récolte (5). En effet, à la lumière de la figure 4, on voit que la huitième articulation (56) liant la première tringle (40) au mécanisme de récolte (5) est située plus haut que la première articulation (18) correspondante et quelque peu devant celle-ci.

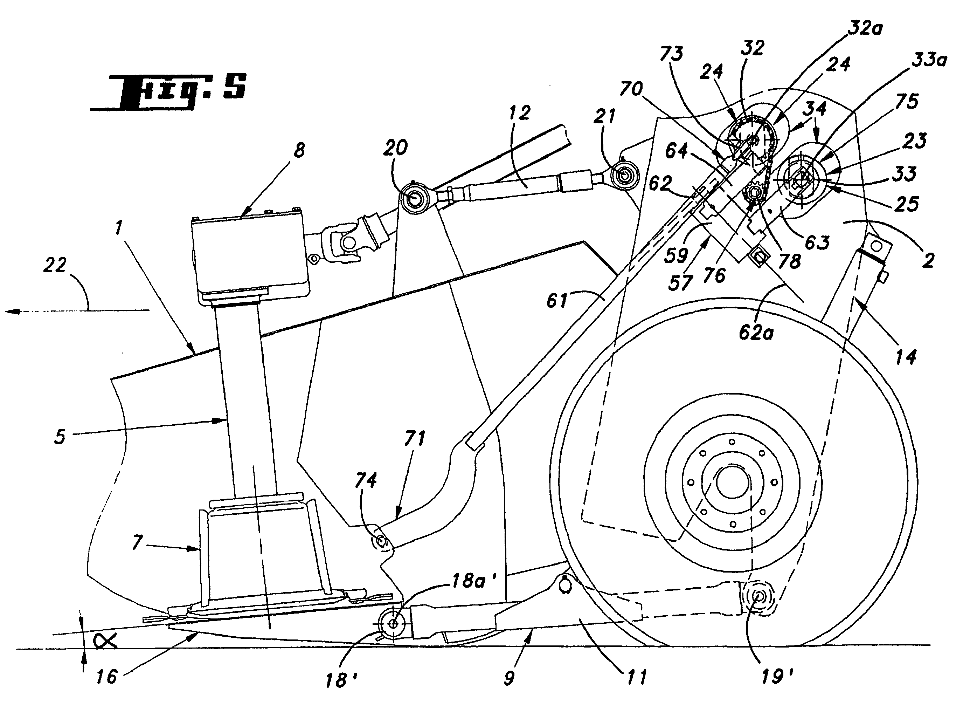

A la lumière de la figure 3, on voit également que la première extrémité (29) du deuxième ressort de traction (33) est liée à un deuxième organe de transmission d'efforts (57) qui convertit l'effort transversal crée par ledit deuxième ressort de traction (33) en un effort dirigé vers le haut au niveau de l'extrémité gauche (16) du mécanisme de récolte (5). A cet effet, le deuxième organe de transmission d'efforts (57) comporte, selon l'exemple de réalisation représenté, un deuxième basculeur (59), une deuxième barre (60) et une deuxième tringle (61). Ce deuxième basculeur (59) est guidé en rotation dans le châssis (2) au moyen d'une neuvième articulation (62) d'axe longitudinal (62a) dirigé vers l'avant et vers le haut (figure 5). Dans l'exemple représenté, l'axe longitudinal (62a) de la neuvième articulation (62) et l'axe longitudinal (41a) de la cinquième articulation (41) s'étendent sensiblement dans un même plan commun. En outre, dans l'exemple représenté, le deuxième basculeur (59) s'étend, selon une vue de côté suivant la direction de la flèche V (figure 1), au même niveau, dans le plan commun, que le premier basculeur (38).

Ce deuxième basculeur (59) est également doté d'un premier bras (63) et d'un deuxième bras (64). Ce premier bras (63) s'étend, en position de travail, vers l'arrière et le haut et vers la droite, alors que le deuxième bras (64) du deuxième basculeur (59) s'étend, en position de travail, vers l'arrière et le haut et vers la gauche. En vue suivant l'axe longitudinal (62a) de la neuvième articulation (62), ces deux bras (63, 64) du deuxième basculeur (59) forment également entre eux un angle aigu. Dans l'exemple représenté, l'angle entre les deux bras (63, 64) du deuxième basculeur (59) est sensiblement égal à l'angle entre les deux bras (42, 43) du premier basculeur (38). On notera encore que le deuxième bras (64) est situé devant le premier bras (62) tel que représenté sur la figure 5. On notera en outre que les deuxièmes bras (43, 64) des deux basculeurs (38, 59) ont sensiblement la même longueur, tandis que la longueur du premier bras (63) du deuxième basculeur (59) est quelque peu supérieure à celle du premier bras (42) du premier basculeur (38) étant donné que l'extrémité gauche (16) du mécanisme de récolte (5) est quelque peu plus lourde que son extrémité droite (15). On notera enfin encore qu'en position normale de travail, les deux bras (63, 64) du deuxième basculeur (59) s'étendent, en vue suivant l'axe longitudinal (62a) de la neuvième articulation (62). sensiblement symétriquement par rapport à un plan vertical s'étendant suivant la direction de travail (22) et contenant ledit axe longitudinal (62a).

Au premier bras (63) est liée l'une (66) des extrémités (66. 67) de la deuxième barre (60) au moyen d'une dixième articulation (68) du type rotule dans l'exemple représenté, tandis que l'autre extrémité (67) de ladite deuxième barre (60) est liée à la première extrémité (29) du deuxième ressort de traction (33) au moyen d'une deuxième liaison glissière (69). Cette deuxième liaison glissière (69) comporte également selon l'exemple de réalisation représenté une deuxième noix (49') vissée dans la première extrémité (29) du deuxième ressort de traction (33), ladite deuxième noix (49') comportant elle-même un trou (50') d'axe longitudinal (50a') sensiblement confondu avec l'axe longitudinal (33a) du deuxième ressort de traction (33). Au travers de ce trou (50') s'étend l'autre extrémité (67) de la deuxième barre (60) de sorte à autoriser un mouvement relatif entre le deuxième ressort de traction (33) et ladite deuxième barre (60). On notera encore qu'il est également prévue un deuxième arrêt (51') à l'autre extrémité (67) de la deuxième barre (60) lequel vient en appui sur la deuxième noix (49') de sorte que le deuxième ressort de traction (33) puisse agir sur le deuxième organe de transmission d'efforts (57).

Au deuxième bras (64) est liée l'une (70) des extrémités (70, 71) de la deuxième tringle (61) au moyen d'une onzième articulation (73) du type rotule dans l'exemple représenté, tandis que l'autre extrémité (71) de ladite deuxième tringle (61) est liée à l'extrémité latérale (16) correspondante du mécanisme de récolte (5) au moyen d'une douzième articulation (74) également du type rotule dans l'exemple représenté.

Cette douzième articulation (74) est également située de sorte que l'effort de traction exercé par la deuxième tringle (61) crée, sur l'extrémité latérale (16) correspondante du mécanisme de récolte (5), un moment par rapport à l'articulation (18) de la deuxième bielle inférieure (11), qui tend à soulever l'avant du mécanisme de récolte (5). En effet, à la lumière de la figure 5, on voit que la douzième articulation (74) est située plus haut que la première articulation (18') correspondante et quelque peu devant celle-ci.

A la lumière de la figure 1, on voit encore que les axes longitudinaux (18a, 18a') des deux premières articulations (18, 18') sont au moins sensiblement confondus.

Une telle disposition des deux premières articulations (18, 18'), de la huitième articulation (56) et de la douzième articulation (74) combinée avec la force d'allégement développée par les ressorts de traction (32, 33) du dispositif d'allégement (23) permet avantageusement de moins solliciter la bielle supérieure (12) ce qui facilite le réglage en longueur de celle-ci. De cette manière, le piquage du mécanisme de récolte (5) (angle α) peut facilement être changé quelle que soit la position dudit mécanisme de récolte (5).

Cette faucheuse (1) selon la présente invention comporte en sus un dispositif centralisé (75) de réglage de la force d'allégement exercée sur le mécanisme de récolte (5).

Ce dispositif centralisé (75) de réglage est couplé aux deux deuxièmes extrémités (30, 31) des deux organes élastiquement déformables (24, 25). A cet effet, le dispositif centralisé (75) de réglage de la force d'allégement exercée sur le mécanisme de récolte (5) comporte un organe de commande rotatif (76) lié au châssis (2) et couplé à chaque deuxième extrémité (30, 31) des organes élastiquement déformables (24, 25) via des moyens convertissant la rotation dudit organe de commande rotatif (76) en une action de bandage ou de détente desdits organes élastiquement déformables (24, 25) selon le sens de rotation dudit organe de commande rotatif (76).

A la lumière de la figure 3 notamment, on voit que les moyens convertissant la rotation de l'organe de commande rotatif (76) en une action de bandage ou de détente des organes élastiquement déformables (24, 25) comportent un axe rotatif de transmission de la commande (78). On notera que la deuxième extrémité (30) du premier organe élastiquement déformable (24) est située aux alentours de l'extrémité latérale (14) du châssis (2), alors que la deuxième extrémité (31) du deuxième organe élastiquement déformable (25) est située aux alentours de l'extrémité latérale (13) dudit châssis (2). L'axe rotatif de transmission de la commande (78) est implanté entre les deuxièmes extrémités (30, 31) des organes élastiquement déformables (24, 25) et s'étend, à cet effet, sur sensiblement toute la longueur du châssis (2) d'une extrémité latérale (13) à l'autre extrémité latérale (14) de ce dernier. On notera encore que cet axe rotatif de transmission de la commande (78) s'étend, en sus, sensiblement horizontalement et parallèlement aux deux organes élastiquement déformables (24, 25).

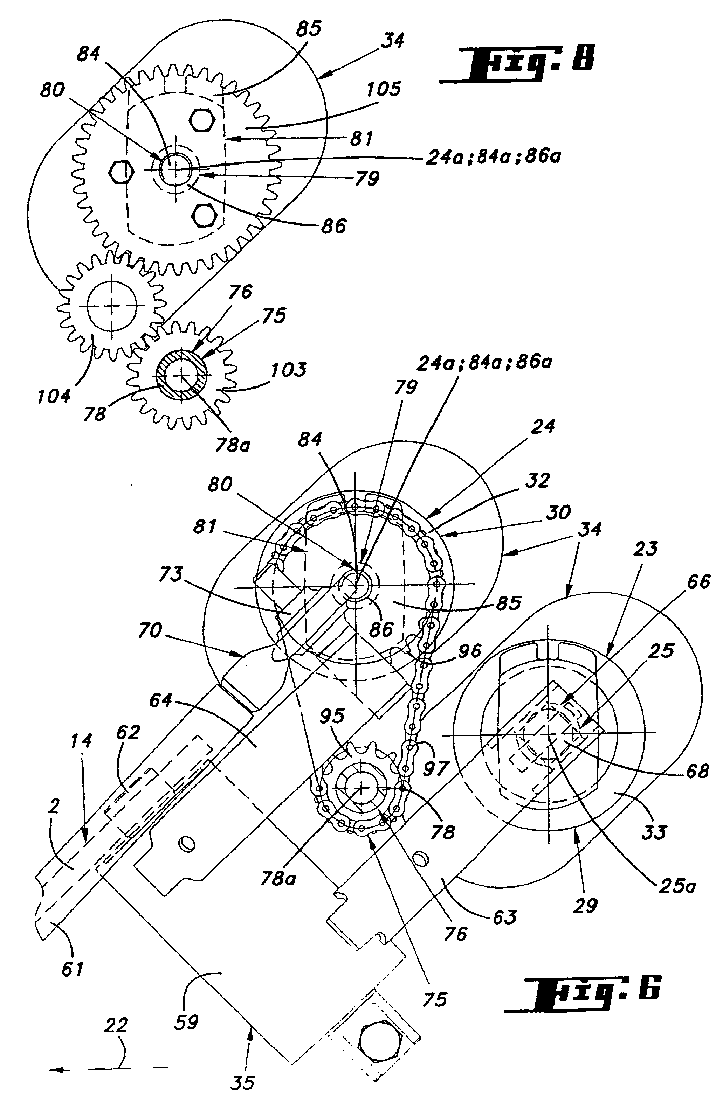

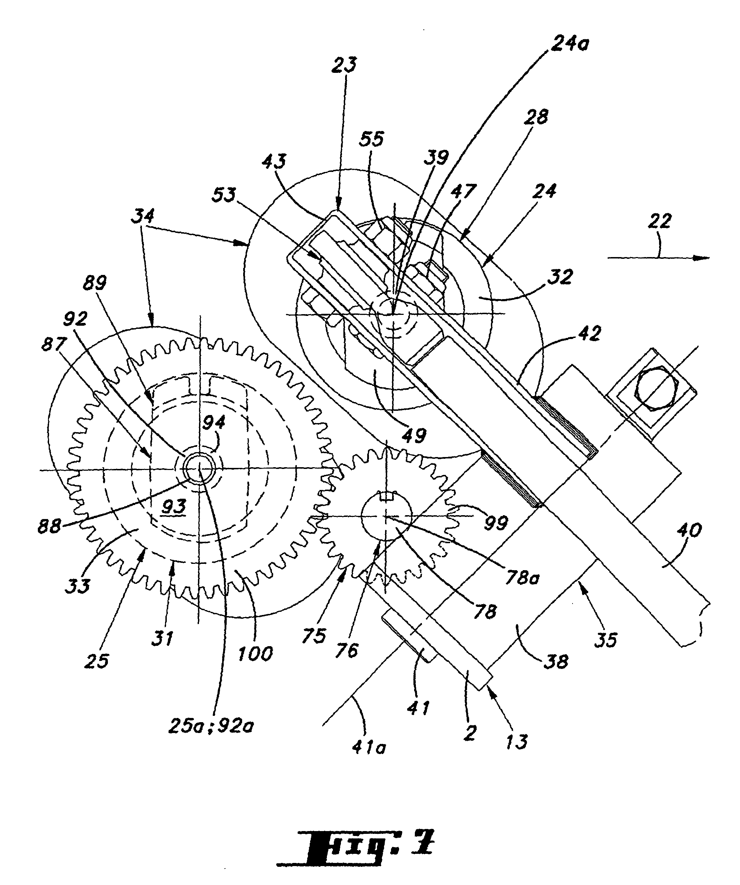

A la lumière des figures 6 et 7, on voit, en sus, qu'un axe longitudinal (78a) de l'axe rotatif de transmission de la commande (78) et les deux axes longitudinaux médians (24a, 25a) des organes élastiquement déformables (24, 25) sont disposés suivant les trois sommets d'un triangle au moins sensiblement isocèle. En d'autres termes, la distance qui sépare l'axe longitudinal (78a) de l'axe rotatif de transmission de la commande (78) de chaque axe longitudinal médian (24a, 25a) des organes élastiquement déformables (24, 25) est au moins sensiblement égale.

Dans une autre solution, cet axe longitudinal (78a) de l'axe rotatif de transmission de la commande (78) et l'axe longitudinal médian (24a, 25a) de chaque organe élastiquement déformable (24, 25) pourront s'étendre au moins sensiblement dans un plan.

A la lumière des différentes figures, on voit que les moyens convertissant la rotation de l'organe de commande rotatif (76) en une action de bandage ou de détente des organes élastiquement déformables (24, 25) comportent en sus un premier organe de liaison à vis et écrou (79) liant la deuxième extrémité (30) du premier organe élastiquement déformable (24) au châssis (2). Ce premier organe de liaison à vis et écrou (79) comporte lui-même un premier organe-vis (80) et un premier organe-écrou (81).

A la lumière de la figure 3, on voit que le premier organe-vis (80) est formé d'une première tige filetée (84) qui est guidée en rotation dans le châssis (2) au moyen d'une première liaison du type pivot (82) de sorte à pouvoir uniquement tourner. Le premier organe-écrou (81) est, quant à lui, lié à la deuxième extrémité (30) du premier organe élastiquement déformable (24). Plus précisément, on remarquera que le premier organe-écrou (81) est formé d'une troisième noix (85) vissée dans la deuxième extrémité (30) du premier ressort de traction (32). Cette troisième noix (85) présente, en son centre, un premier trou fileté (86) d'axe longitudinal (86a) au moins sensiblement confondu avec l'axe longitudinal (32a) du premier ressort de traction (32). Dans ce premier trou fileté (86) est vissée la première tige filetée (84).

Les moyens convertissant la rotation de l'organe de commande rotatif (76) en une action de bandage ou de détente des organes élastiquement déformables (24, 25) comporte également un deuxième organe de liaison à vis et écrou (87) liant la deuxième extrémité (31) du deuxième organe élastiquement déformable (25) au châssis (2). Ce deuxième organe de liaison à vis et écrou (87) comporte lui-même un deuxième organe-vis (88) et un deuxième organe-écrou (89).

A la lumière de la figure 3, on voit que le deuxième organe-vis (88) est formé d'une deuxième tige filetée (92) qui est guidée en rotation dans le châssis (2) au moyen d'une deuxième liaison du type pivot (90) de sorte à pouvoir uniquement tourner. Le deuxième organe-écrou (89) est, quant à lui, lié à la deuxième extrémité (31) du deuxième organe élastiquement déformable (25). On remarquera que le deuxième organe-écrou (89) est formé d'une quatrième noix (93) vissée dans la deuxième extrémité (31) du deuxième ressort de traction (33). Cette quatrième noix (93) présente, en son centre, un deuxième trou fileté (94) d'axe longitudinal (94a) au moins sensiblement confondu avec l'axe longitudinal (33a) du deuxième ressort de traction (33). Dans ce deuxième trou fileté (94) est vissée la deuxième tige filetée (92).

On notera que, selon l'exemple de réalisation représenté, le filetage des tiges filetées (84, 92) et des trous filetés (86, 94) des noix (85, 93) correspondantes, sont des filetages à droite.

Les moyens convertissant la rotation de l'organe de commande rotatif (76) en une action de bandage ou de détente des organes élastiquement déformables (24, 25) comportent en sus un premier pignon (95), un deuxième pignon (96) et une chaîne (97) reliant ces derniers entre eux de manière à permettre de transmettre le mouvement de rotation de l'un des pignons (95, 96) à l'autre dcsdits pignons (95, 96).

A la lumière des figures 3 et 6 notamment, on voit plus précisément que les deux pignons (95, 96) et la chaîne (97) sont situés au niveau de la deuxième extrémité (30) du premier organe élastiquement déformable (24).

Ces deux pignons (95, 96) et la chaîne (97) permettent de coupler le premier organe de liaison à vis et écrou (79) à l'axe rotatif de transmission de la commande (78). A cet effet, le premier pignon (95) est fixé à l'axe rotatif de transmission de la commande (78) et le deuxième pignon (96) est fixé à la première tigc filetéc (84). On remarquera que le premier pignon (95) est avantageusement diamétralement plus petit que le deuxième pignon (96) et que ledit premier pignon (95) est situé sensiblement à la verticale en dessous dudit deuxième pignon (96).

A la lumière des figures 3 et 7 notamment, on voit que les moyens convertissant la rotation de l'organe de commande rotatif (76) en une action de bandage ou de détente des organes élastiquement déformables (24, 25) comportent en outre une première roue dentée cylindrique (99) et une deuxième roue dentée cylindrique (100). Ces deux roues dentées cylindriques (99, 100) sont, quant à elles, situées au niveau de la deuxième extrémité (31) du deuxième organe élastiquement déformable (25). Ces deux roues dentées cylindriques (99, 100) couplent le deuxième organe de liaison à vis et écrou (87) à l'axe rotatif de transmission de la commande (78). A cet effet, on voit, à la lumière de la figure 7, que la deuxième roue dentée cylindrique (100) engrène avec la première roue dentée cylindrique (99) de manière à permettre de transmettre le mouvement de rotation de l'une desdites roues dentées cylindriques (99, 100) à l'autre desdites roues dentées cylindriques (99, 100). Pour ce faire, la première roue dentée cylindrique (99) est fixée à l'axe rotatif de transmission de la commande (78) et la deuxième roue dentée cylindrique (100) est fixée à la deuxième tige filetée (92). On remarquera que la première roue dentée cylindrique (99) est également avantageusement diamétralement plus petite que la deuxième roue dentée cylindrique (100) et que ladite deuxième roue dentée cylindrique (100) est située derrière ladite première roue dentée cylindrique (99).

A la lumière de la figure 3, on voit que l'organe de commande rotatif (76) est lié directement à l'axe rotatif de transmission de la commande (78) et comporte un axe de commande rotatif (101) qui est au moins sensiblement colinéaire avec ledit axe rotatif de transmission de la commande (78). De manière plus précise, on remarquera que l'axe de commande rotatif (101) et l'axe rotatif de transmission de la commande (78) forment en fait une seule pièce. L'organe de commande rotatif (76) comporte également une manivelle (102) s'étendant à l'extrémité latérale gauche (14) du châssis (2) et à l'extérieur de ce dernier de manière à permettre à l'opérateur d'accéder rapidement et facilement à ladite manivelle (102) pour intervenir sur le réglage du dispositif centralisé (75) de réglage de la faucheuse (1). Cette manivelle (102) peut être avantageusement rabattue après le réglage de l'allégement pour éviter qu'elle ne dépasse la largeur hors-tout de la faucheuse (1). Ainsi, elle ne risque pas d'être arrachée ou de blesser une personne durant l'utilisation de la faucheuse (1).

Ce dispositif centralisé (75) de réglage de la force d'allégement exercée sur le mécanisme de récolte (5) fonctionne de la manière suivante.

Lorsque l'opérateur souhaite changer la force d'allégement exercée sur le mécanisme de récolte (5), il agit sur la manivelle (102). En tournant la manivelle (102) dans le sens des aiguilles d'une montre (en considérant l'opérateur qui effectue le réglage), l'axe rotatif de transmission de la commande (78) est animé en rotation ce qui permet d'animer en rotation la première tige filetée (84) et la deuxième tige filetée (92). En effet, lors de la rotation de l'axe rotatif de transmission de la commande (78) dans le sens des aiguilles d'une montre, le premier pignon (95) qui est fixé sur ledit axe rotatif de transmission de la commande (78) permet, via la chaîne (97), d'entraîner dans le même sens de rotation le deuxième pignon (96) lequel est fixé sur la première tige filetée (84).

Lors de cette rotation de l'axe rotatif de transmission de la commande (78), la première roue dentée cylindrique (99) est entraînée dans le même sens que le premier pignon (95) et permet, via la deuxième roue dentée cylindrique (100), d'entraîner la deuxième tige filetée (92) dans le sens inverse à celui de ladite première roue dentée cylindrique (99).

Lorsque la première tige filetée (84) tourne dans le sens des aiguilles d'une montre, la troisième noix (85) est déplacée vers la gauche, ce qui permet d'accroître le bandage du premier ressort de traction (32), lequel agit sur la première barre (39) qui agit elle-même sur la première tringle (40) via le premier basculeur (38) de manière que ladite première tringle (40) crée un effort d'allégement accru sur l'extrémité latérale droite (15) du mécanisme de récolte (5). Simultanément la deuxième tige filetée (92) tourne dans le sens inverse à celui de la première tige filetée (84) de sorte que. la quatrième noix (93) est déplacée vers la droite, ce qui permet d'accroître le bandage du deuxième ressort de traction (33) lequel agit sur la deuxième barre (60) qui agit elle-même sur la deuxième tringle (61) via le deuxième basculeur (59), de manière que ladite deuxième tringle (61) crée également un effort d'allégement accru sur l'extrémité latérale gauche (16) du mécanisme de récolte (5).

En tournant la manivelle (102) dans le sens contraire aux aiguilles d'une montre, c'est l'effet inverse qui est obtenu, le bandage des deux ressorts de traction (32, 33) décroît, ce qui se traduit par une baisse de l'effort d'allégement exercé sur le mécanisme de récolte (5).

Diverses modifications peuvent être apportées à l'exemple qui vient d'être décrit, notamment en ce qui concerne la constitution des divers éléments par substitution d'équivalents techniques sans pour autant sortir du domaine de protection défini par les revendications.

C'est ainsi qu'il est, par exemple, parfaitement possible de prévoir que la manivelle (102) soit montée sur la première tige filetée (84) ou la deuxième tige filetée (92). La tige filetée (84, 92) pouvant alors être prolongée jusqu'à s'étendre en dehors du châssis (2).

Pour faciliter le réglage de l'effort d'allégement exercé sur le mécanisme de récolte (5), il est encore parfaitement possible de remplacer la manivelle (102) par un moteur du type hydraulique ou électrique par exemple. Un tel moteur permettrait à l'opérateur de changer l'effort d'allégement exercé sur le mécanisme de récolte (5) pendant le travail sans qu'il n'ait besoin de quitter le poste de pilotage du véhicule moteur (4).

Il est aussi parfaitement possible de prévoir, par exemple, que la première tige filetée (84) et le premier trou fileté (86) de la troisième noix (85) comportent un filetage à droite alors que la deuxième tige filetée (92) et le deuxième trou fileté (94) de la quatrième noix (93) comportent un filetage à gauche, ce qui permettrait ainsi de conserver le même sens de rotation des deux tiges filetées (84, 92).

Enfin, il est également possible de remplacer les ressorts de traction (32, 33) par des barres de torsion, par exemple, commandées par des moyens convertissant la rotation de l'organe de commande (76) en une action de bandage ou de détente desditcs barres de torsion.

Il est de surcroît parfaitement possible de remplacer le premier pignon (95). le deuxième pignon (96) et la chaîne (97) par trois roues dentées cylindriques (103, 104, 105) qui engrènent de manière à ce que la première tige filetée conserve le même sens de rotation que l'axe rotatif de transmission de la commande (78).

On comprendra encore que la manivelle (102) pourrait s'étendre à l'extrémité latérale droite (13) du châssis (2).

On comprendra enfin encore que les ressorts de traction (32, 33) pourraient également s'étendre en dehors du châssis (2).

## Revendications

1. Faucheuse comportant :
- un châssis (2),
- un moyen de liaison (3) permettant de lier ledit châssis (2) à un véhicule moteur (4),
- au moins un mécanisme de récolte (5) muni d'organes de coupe (7),
- un dispositif de suspension (9) liant ledit mécanisme de récolte (5) au châssis (2) en autorisant un déplacement en hauteur dudit mécanisme de récolte (5) par rapport audit châssis (2),
- un dispositif d'allégement (23) associé audit mécanisme de récolte (5) et comportant deux organes élastiquement déformables (24, 25) s'étendant transversalement à la direction d'avance (22) durant le travail, chaque organe élastiquement déformable (24, 25) attaquant par une première (28, 29) de ses extrémités (28, 29, 30, 31) une extrémité (15, 16) correspondante du mécanisme de récolte (5) via un organe de transmission d'efforts (35, 57) convertissant l'effort transversal créé par ledit organe élastiquement déformable (24, 25) en un effort dirigé vers le haut au niveau du mécanisme de récolte (5),
- un dispositif centralisé de réglage (75) de la force d'allégement exercée sur ledit mécanisme de récolte (5), ledit dispositif (75) étant couplé aux deuxièmes extrémités (30, 31) desdits organes élastiquement déformables (24, 25),
***caractérisée en ce* que** le dispositif centralisé de réglage (75) de la force d'allégement exercée sur le mécanisme de récolte (5) comporte un organe de commande rotatif (76) lié au châssis (2) et couplé à chaque deuxième extrémité (30, 31) desdits organes élastiquement déformables (24, 25) via des moyens convertissant la rotation dudit organe de commande rotatif (76) en une action de bandage ou de détente desdits organes élastiquement déformables (24, 25) selon le sens de rotation dudit organe de commande rotatif (76).

2. Faucheuse selon la revendication 1, ***caractérisée en ce* que** lesdits moyens convertissant la rotation de l'organe de commande rotatif (76) en une action de bandage ou de détente des organes élastiquement déformables (24, 25) comportent un axe rotatif de transmission de la commande (78) implanté entre les deuxièmes extrémités (30, 31) des organes élastiquement déformables (24, 25).

3. Faucheuse selon la revendication 2, ***caractérisée en ce* que** l'axe rotatif de transmission de la commande (78) et les deux organes élastiquement déformables (24, 25) s'étendent au moins sensiblement horizontalement.

4. Faucheuse selon la revendication 2 ou 3, ***caractérisée en ce* que** l'axe rotatif de transmission de la commande (78) et les deux organes élastiquement déformables (24, 25) sont au moins sensiblement parallèles.

5. Faucheuse selon la revendication 4, ***caractérisée en ce* que** en vue suivant un axe longitudinal (78a) de l'axe rotatif de transmission de la commande (78), ledit axe longitudinal (78a) et un axe longitudinal médian (24a, 25a) de chaque organe élastiquement déformable (24, 25) sont disposés suivant les trois sommets d'un triangle au moins sensiblement isocèle.

6. Faucheuse selon la revendication 4, ***caractérisée en ce* que** un axe longitudinal (78a) de l'axe rotatif de transmission de la commande (78) et un axe longitudinal (24a, 25a) médian de chaque organe élastiquement déformable (24, 25) s'étendent au moins sensiblement dans un plan.

7. Faucheuse selon l'une quelconque des revendications 2 à 6, ***caractérisée en ce* que** les moyens convertissant la rotation de l'organe de commande rotatif (76) en une action de bandage ou de détente des organes élastiquement déformables (24, 25) comportent en sus au moins deux roues dentées cylindriques (99, 100) au niveau de la deuxième extrémité (30, 31) de l'un au moins des organes élastiquement déformables (24, 25).

8. Faucheuse selon l'une quelconque des revendications 2 à 7, ***caractérisée en ce* que** les moyens convertissant la rotation de l'organe de commande rotatif (76) en une action de bandage ou de détente des organes élastiquement déformables (24, 25) comportent en sus au moins deux pignons (95, 96) et au moins une chaîne (97) au niveau de la deuxième extrémité (30, 31) de l'un au moins des organes élastiquement déformables (24, 25).

9. Faucheuse selon l'une quelconque des revendications 2 à 8, ***caractérisée en ce* que** les moyens convertissant la rotation de l'organe de commande rotatif (76) en une action de bandage ou de détente des organes élastiquement déformables (24, 25) comportent en sus deux organes de liaison à vis et écrou (79, 87) liant chacun la deuxième extrémité (30, 31) de l'organe élastiquement déformable (24, 25) correspondant au châssis (2).

10. Faucheuse selon les revendications 9 et 7, ***caractérisée en ce* que** lesdites roues dentées cylindriques (99, 100) au niveau de la deuxième extrémité (30, 31) de l'un au moins des organes élastiquement déformables (24, 25) couplent l'organe de liaison à vis et écrou (79, 87) correspondant à l'axe rotatif de transmission de la commande (78).

11. Faucheuse selon les revendications 9 et 8, ***caractérisée en ce* que** lesdits pignons (95, 96) et ladite (lesdites) chaîne(s) (97) au niveau de la deuxième extrémité (30, 31) de l'un au moins des organes élastiquement déformables (24, 25) couplent l'organe de liaison à vis et écrou (79, 87) correspondant à l'axe rotatif de transmission de la commande (78).

12. Faucheuse selon les revendications 10 et 11, ***caractérisée en ce* que** :
- au niveau de la deuxième extrémité (30, 31) de l'un des organes élastiquement déformables (24, 25) sont prévues deux roues dentées cylindriques (99, 100) qui couplent l'organe de liaison à vis et écrou (79, 87) correspondant à l'axe rotatif de transmission de la commande (78) ;
- au niveau de la deuxième extrémité (30, 31) de l'autre organe élastiquement déformable (24, 25) sont prévus deux pignons (95, 96) et une chaîne (97) ou trois roues dentées cylindriques (103, 104, 105) qui couplent l'organe de liaison à vis et écrou (79, 87) correspondant à l'axe rotatif de transmission de la commande (78).

13. Faucheuse selon l'une quelconque des revendications 9 à 12, ***caractérisée en ce* que** chaque organe de liaison à vis et écrou (79, 87) comporte un organe-vis (80, 88) et un organe-écrou (81, 89), ledit organe-vis (80, 88) ou ledit organe-écrou (81, 89) étant lié au châssis (2) de sorte à pouvoir uniquement tourner.

14. Faucheuse selon la revendication 13, ***caractérisée en ce* que** :
- l'organe-vis (80, 88) est formé d'une tige filetée (84, 92) qui est guidée en rotation dans le châssis (2) sans possibilité de translation,
- l'organe-écrou (81, 89) est lié à la deuxième extrémité (30, 31) de l'organe élastiquement déformable (24, 25) correspondant.

15. Faucheuse selon l'une quelconque des revendications 1 à 14, ***caractérisée en ce* que** chaque organe élastiquement déformable (24, 25) comporte au moins un ressort à boudin cylindrique (32, 33).

16. Faucheuse selon la revendication 15, ***caractérisée en ce* que** ledit (lesdits) ressort(s) à boudin cylindrique(s) est (sont) un (des) ressort(s) de traction (32, 33).

17. Faucheuse selon la revendication 14 et la revendication 15 ou 16, ***caractérisée en ce* que** l'organe-écrou (81, 89) est formé d'une noix (85, 93) vissée dans l'extrémité (30, 31) du (de l'un des) ressort(s) à boudin cylindrique(s) (32, 33) de l'organe élastiquement déformable (24, 25) correspondant, ladite noix (85, 93) présentant un trou fileté (86, 94) dans lequel est vissée la tige filetée (84, 92) de l'organe-vis (80, 88) correspondant.

18. Faucheuse selon l'une quelconque des revendications 1 à 17 prises en combinaison avec la revendication 2, ***caractérisée en ce* que** l'organe de commande rotatif (76) est lié directement à l'axe rotatif de transmission de la commande (78).

19. Faucheuse selon la revendication 18, ***caractérisée en ce* que** l'organe de commande rotatif (76) comporte un axe de commande rotatif (101) au moins sensiblement colinéaire avec l'axe rotatif de transmission de la commande (78).

20. Faucheuse selon la revendication 19, ***caractérisée en ce* que** l'axe de commande rotatif (101) et l'axe rotatif de transmission de la commande (78) forment une seule pièce.

21. Faucheuse selon l'une quelconque des revendications 1 à 20, ***caractérisée en ce* que** l'organe de commande rotatif (76) comporte une manivelle (102) s'étendant à l'extérieur du châssis (2).

22. Faucheuse selon la revendication *21,* ***caractérisée en ce* que** la manivelle (102) s'étend à l'une des extrémités longitudinales (13, 14) du châssis (2).

23. Faucheuse selon la revendication 22, ***caractérisée en ce* que** la manivelle (102) s'étend, vue dans le sens d'avance durant le travail, à l'extrémité gauche (13) du châssis (2).

24. Faucheuse selon l'une quelconque des revendications 1 à 23, ***caractérisée en ce* que** chaque organe élastiquement déformable (24, 25) attaque le mécanisme de récolte (5) au moyen :
- d'un basculeur (38, 59) guidé en rotation dans le châssis (2) et auquel est liée directement ou indirectement la première extrémité (28, 29) dudit organe élastiquement déformable (24, 25),
- d'une tringle (40, 61) s'étendant entre le basculeur (38, 59) et l'extrémité correspondante (15, 16) du mécanisme de récolte (5).

25. Faucheuse selon la revendication 24, ***caractérisée en ce* que** :
- le dispositif de suspension (9) liant le mécanisme de récolte (5) au châssis (2) comporte notamment deux bielles inférieures (10, 11) articulées chacune entre une extrémité (15, 16) du mécanisme de récolte (5) et le châssis (2) ;
- chaque tringle (40, 61) est articulée sur le mécanisme de récolte (5) en un point de sorte que l'effort de traction exercé par les tringles (40, 61) crée, par rapport à l'articulation (18, 18') des bielles inférieures (10, 11) sur le mécanisme de récolte (5), un moment qui tend à soulever l'avant du mécanisme de récolte (5).

26. Faucheuse selon l'une quelconque des revendications 1 à 25, ***caractérisée en ce* que** :
- le châssis (2) comporte une partie creuse (34) s'étendant transversalement à la direction d'avance (22) durant le travail ;
- les organes élastiquement déformables (24, 25) s'étendent au moins sensiblement entièrement à l'intérieur de ladite partie creuse (34) du châssis (2).

## Claims

1. Mower comprising:
- a chassis (2),
- a connecting means (3) allowing the said chassis (2) to be connected to a motor vehicle (4),
- at least one harvesting mechanism (5) equipped with cutting elements (7),
- a suspension device (9) connecting the said harvesting mechanism (5) to the chassis (2) and allowing the said harvesting mechanism (5) a heightwise movement with respect to the said chassis (2),
- a lightening device (23) associated with the said harvesting mechanism (5) and comprising two elastically deformable elements (24, 25) extending transversely to the direction of forward travel (22) during work, each elastically deformable element (24, 25) acting, via a first (28, 29) of its ends (28, 29, 30, 31), on a corresponding end (15, 16) of the harvesting mechanism (5) via a load-transmission element (35, 57) converting the transverse load created by the said elastically deformable element (24, 25) into an upwardly-directed load at the harvesting mechanism (5),
- a centralized device (75) for adjusting the lightening force exerted on the said harvesting mechanism (5), the said device (75) being coupled to the second ends (30, 31) of the said elastically deformable elements (24, 25),
***characterized in* that** the centralized device (75) for adjusting the lightening force exerted on the harvesting mechanism (5) comprises a rotary control element (76) connected to the chassis (2) and coupled to each second end (30, 31) of the said elastically deformable elements (24, 25) via means which convert the rotation of the said rotary control element (76) into an action of stressing or relaxing the said elastically deformable elements (24, 25) depending on the direction of rotation of the said rotary control element (76).

2. Mower according to Claim 1, ***characterized in* that** the said means converting the rotation of the rotary control element (76) into an action of stressing or relaxing the elastically deformable elements (24, 25) comprise a rotary control-transmitting spindle (78) fitted between the second ends (30, 31) of the elastically deformable elements (24, 25).

3. Mower according to Claim 2, ***characterized in* that** the rotary control-transmitting spindle (78) and the two elastically deformable elements (24, 25) extend at least approximately horizontally.

4. Mower according to Claim 2 or 3, ***characterized in* that** the rotary control-transmitting spindle (78) and the two elastically deformable elements (24, 25) are at least approximately parallel.

5. Mower according to Claim 4, ***characterized in* that**, viewed along a longitudinal axis (78a) of the rotary control-transmitting spindle (78), the said longitudinal axis (78a) and a longitudinal central axis (24a, 25a) of each elastically deformable element (24, 25) are arranged with respect to the three vertices of an at least approximately isosceles triangle.

6. Mower according to Claim 4, ***characterized in* that** a longitudinal axis (78a) of the rotary control-transmitting spindle (78) and a longitudinal central axis (24a, 25a) of each elastically deformable element (24, 25) extend at least approximately in one plane.

7. Mower according to any one of Claims 2 to 6, ***characterized in* that** the means converting the rotation of the rotary control element (76) into an action of stressing or relaxing the elastically deformable elements (24, 25) additionally comprise at least two cylindrical gear wheels (99, 100) at the second end (30, 31) of at least one of the elastically deformable elements (24, 25).

8. Mower according to any one of Claims 2 to 7, ***characterized in* that** the means converting the rotation of the rotary control element (76) into an action of stressing or relaxing the elastically deformable elements (24, 25) additionally comprise at least two pinions (95, 96) and at least one chain (97) at the second end (30, 31) of at least one of the elastically deformable elements (24, 25).

9. Mower according to any one of Claims 2 to 8, ***characterized in* that** the means converting the rotation of the rotary control element (76) into an action of stressing or relaxing the elastically deformable elements (24, 25) additionally comprise two screw-and-nut connecting elements (79, 87), each connecting the second end (30, 31) of the corresponding elastically deformable element (24, 25) to the chassis (2).

10. Mower according to Claims 9 and 7, ***characterized in* that** the said cylindrical gear wheels (99, 100) at the second end (30, 31) of at least one of the elastically deformable elements (24, 25) couple the corresponding screw-and-nut connecting element (79, 87) to the rotary control-transmitting spindle (78).

11. Mower according to Claims 9 and 8, ***characterized in* that** the said pinions (95, 96) and the said chain(s) (97) at the second end (30, 31) of at least one of the elastically deformable elements (24, 25) couple the corresponding screw-and-nut connecting element (79, 87) to the rotary control-transmitting spindle (78).

12. Mower according to Claims 10 and 11, ***characterized in* that**:
- at the second end (30, 31) of one of the elastically deformable elements (24, 25) there are two cylindrical gear wheels (99, 100) which couple the corresponding screw-and-nut connecting element (79, 87) to the rotary control-transmitting spindle (78);
- at the second end (30, 31) of the other elastically deformable element (24, 25) there are two pinions (95, 96) and a chain (97) or three cylindrical gear wheels (103, 104, 105) which couple the corresponding screw-and-nut connecting element (79, 87) to the rotary control-transmitting spindle (78).

13. Mower according to any one of Claims 9 to 12, ***characterized in* that** each screw-and-nut connecting element (79, 87) has a screw element (80, 88) and a nut element (81, 89), the said screw element (80, 88) or the said nut element (81, 89) being connected to the chassis (2) so that it can only turn.

14. Mower according to Claim 13, ***characterized in* that**:
- the screw element (80, 88) is formed of a threaded rod (84, 92) which is guided in rotation in the chassis (2) without the possibility of translational movement,
- the nut element (81, 89) is connected to the second end (30, 31) of the corresponding elastically deformable element (24, 25).

15. Mower according to any one of Claims 1 to 14, ***characterized in* that** each elastically deformable element (24, 25) comprises at least one cylindrical coil spring (32, 33).

16. Mower according to Claim 15, ***characterized in* that** the said cylindrical coil spring(s) is (are) (a) draw-spring(s) (32, 33).

17. Mower according to Claim 14 and Claim 15 or 16, ***characterized in* that** the nut element (81, 89) is formed of a nut (85, 93) screwed into the end (30, 31) of (one of) the cylindrical coil spring(s) (32, 33) of the corresponding elastically deformable element (24, 25), the said nut (85, 93) having a threaded hole (86, 94) into which the threaded rod (84, 92) of the corresponding screw element (80, 88) is screwed.

18. Mower according to any one of Claims 1 to 17 taken in combination with Claim 2, ***characterized in* that** the rotary control element (76) is connected directly to the rotary control-transmitting spindle (78).

19. Mower according to Claim 18, ***characterized in* that** the rotary control element (76) has a rotary control spindle (101) which is at least approximately colinear with the rotary control-transmitting spindle (78).

20. Mower according to Claim 19, ***characterized in* that** the rotary control spindle (101) and the rotary control-transmitting spindle (78) form a single piece.

21. Mower according to any one of Claims 1 to 20, ***characterized in* that** the rotary control element (76) has a cranking handle (102) extending to outside the chassis (2).

22. Mower according to Claim 21, ***characterized in* that** the cranking handle (102) extends at one of the longitudinal ends (13, 14) of the chassis (2).

23. Mower according to Claim 22, ***characterized in* that** the cranking handle (102) extends, viewed in the direction of forward travel during work, at the left-hand end (13) of the chassis (2).

24. Mower according to any one of Claims 1 to *23,* ***characterized in* that** each elastically deformable element (24, 25) acts on the harvesting mechanism (5) by means of:
- a rocker arm (38, 59) guided in rotation in the chassis (2) and to which the first end (28, 29) of the said elastically deformable element (24, 25) is connected directly or indirectly,
- a rod (40, 61) extending between the rocker arm (38, 59) and the corresponding end (15, 16) of the harvesting mechanism (5).

25. Mower according to Claim 24, ***characterized in* that**:
- the suspension device (9) connecting the harvesting mechanism (5) to the chassis (2) comprises, in particular, two lower connecting-rods (10, 11) each articulated between one end (15, 16) of the harvesting mechanism (5) and the chassis (2);
- each rod (40, 61) is articulated to the harvesting mechanism (5) at a point in such a way that the tractive effort exerted by the rods (40, 61) creates, with respect to the articulation (18, 18') of the lower connecting-rods (10, 11) on the harvesting mechanism (5), a moment which tends to raise the front of the harvesting mechanism (5).

26. Mower according to any one of Claims 1 to 25, ***characterized in* that**:
- the chassis (2) comprises a hollow part (34) extending transversely to the direction of forward travel (22) during work;
- the elastically deformable elements (24, 25) extend at least approximately entirely inside the said hollow part (34) of the chassis (2).

## Patentansprüche

1. Mähmaschine, die
- ein Gestell (2),
- ein Verbindungsmittel (3), das die Verbindung des Gestells (2) mit einem Motorfahrzeug (4) gestattet,
- mindestens einen mit Schneidelementen (7) ausgestatteten Erntemechanismus (5),
- eine Aufhängungsvorrichtung (9), die den Erntemechanismus (5) mit dem Gestell (2) verbindet und dabei eine Höhenverschiebung des Erntemechanismus (5) bezüglich des Gestells (2) gestattet,
- eine dem Erntemechanismus (5) zugeordnete Entlastungsvorrichtung (23), die zwei elastisch verformbare Glieder (24, 25) aufweist, die sich im Betrieb quer zur Vorschubrichtung (22) erstrecken, wobei jedes elastisch verformbare Glied (24, 25) durch ein erstes (28, 29) seiner Enden (28, 29, 30, 31) über ein Kraftübertragungsglied (35, 57), das die durch das elastisch verformbare Glied (24, 25) erzeugte Querkraft in eine nach oben gerichtete Kraft im Bereich des Erntemechanismus (5) umwandelt, an ein entsprechendes Ende (15, 16) des Erntemechanismus (5) angreift,
- eine zentrale Vorrichtung (75) zur Einstellung der auf den Erntemechanismus (5) ausgeübten Entlastungskraft, wobei die Vorrichtung (75) mit den zweiten Enden (30, 31) der elastisch verformbaren Glieder (24, 25) verbunden ist,
umfasst,
***dadurch gekennzeichnet,* dass** die zentrale Vorrichtung (75) zur Einstellung der auf den Erntemechanismus (5) ausgeübten Entlastungskraft ein mit dem Gestell (2) verbundenes Betätigungsdrehglied (76) aufweist, das über die Drehung des Betätigungsdrehglieds (76) in einen Spann- oder Entspannungsvorgang der elastisch verformbaren Glieder (24, 25) in Drehrichtung des Betätigungsdrehglieds (76) umwandelnde Mittel mit jedem zweiten Ende (30, 31) der elastisch verformbaren Glieder (24, 25) verbunden ist.

2. Mähmaschine nach Anspruch 1, ***dadurch gekennzeichnet,* dass** die die Drehung des Betätigungsdrehglieds (76) in einen Spann- oder Entspannungsvorgang der elastisch verformbaren Glieder (24, 25) umwandelnden Mittel eine zwischen den zweiten Enden (30, 31) der elastisch verformbaren Glieder (24, 25) angeordnete Betätigungsübertragungsdrehspindel (78) aufweisen.

3. Mähmaschine nach Anspruch 2, ***dadurch gekennzeichnet,* dass** sich die Betätigungsübertragungsdrehspindel (78) und die beiden elastisch verformbaren Glieder (24, 25) zumindest im Wesentlichen horizontal erstrecken.

4. Mähmaschine nach Anspruch 2 oder 3, ***dadurch gekennzeichnet,* dass** die Betätigungsübertragungsdrehspindel (78) und die beiden elastisch verformbaren Glieder (24, 25) zumindest im Wesentlichen parallel verlaufen.

5. Mähmaschine nach Anspruch 4, ***dadurch gekennzeichnet,* dass** mit Blickrichtung entlang einer Längsachse (78a) der Betätigungsübertragungsdrehspindel (78) die Längsachse (78a) und eine mittlere Längsachse (24a, 25a) jedes elastisch verformbaren Glieds (24, 25) gemäß den drei Spitzen eines zumindest im Wesentlichen gleichschenkligen Dreiecks angeordnet sind.

6. Mähmaschine nach Anspruch 4, ***dadurch gekennzeichnet,* dass** sich eine Längsachse (78a) der Betätigungsübertragungsdrehspindel (78) und eine mittlere Längsachse (24a, 25a) jedes elastisch verformbaren Glieds (24, 25) zumindest im Wesentlichen in einer Ebene erstrecken.

7. Mähmaschine nach irgend einem der Ansprüche 2 bis 6, ***dadurch gekennzeichnet,* dass** die die Drehung des Betätigungsdrehglieds (76) in einen Spann- oder Entspannungsvorgang der elastisch verformbaren Glieder (24, 25) umwandelnden Mittel des Weiteren mindestens zwei Zylinderzahnräder (99, 100) im Bereich des zweiten Endes (30, 31) mindestens eines der elastisch verformbaren Glieder (24, 25) aufweisen.

8. Mähmaschine nach irgend einem der Ansprüche 2 bis 7, ***dadurch gekennzeichnet,* dass** die die Drehung des Betätigungsdrehglieds (76) in einen Spann- oder Entspannungsvorgang der elastisch verformbaren Glieder (24, 25) umwandelnden Mittel des Weiteren mindestens zwei Ritzel (95, 96) und mindestens eine Kette (97) im Bereich des zweiten Endes (30, 31) mindestens eines der elastisch verformbaren Glieder (24, 25) aufweisen.

9. Mähmaschine nach irgend einem der Ansprüche 2 bis 8, ***dadurch gekennzeichnet,* dass** die die Drehung des Betätigungsdrehglieds (76) in einen Spann- oder Entspannungsvorgang der elastisch verformbaren Glieder (24, 25) umwandelnden Mittel des Weiteren zwei Schraub-Mutter-Verbindungsglieder (79, 87) umfassen, die jeweils das zweite Ende (30, 31) des entsprechenden elastisch verformbaren Glieds (24, 25) mit dem Gestell (2) verbinden.

10. Mähmaschine nach den Ansprüchen 9 und 7, ***dadurch gekennzeichnet,* dass** die Zylinderzahnräder (99, 100) im Bereich des zweiten Endes (30, 31) mindestens eines der elastisch verformbaren Glieder (24, 25) das entsprechende Schraub-Mutter-Verbindungsglied (79, 87) mit der Betätigungsübertragungsdrehspindel (78) verbinden.

11. Mähmaschine nach den Ansprüchen 9 und 8, ***dadurch gekennzeichnet,* dass** die Ritzel (95, 96) und die Kette(n) (97) im Bereich des zweiten Endes (30, 31) mindestens eines der elastisch verformbaren Glieder (24, 25) das entsprechende Schraub-Mutter-Verbindungsglied (79, 87) mit der Betätigungsübertragungsdrehspindel (78) verbinden.

12. Mähmaschine nach den Ansprüchen 10 und 11, ***dadurch gekennzeichnet,* dass**
- im Bereich des zweiten Endes (30, 31) eines der elastisch verformbaren Glieder (24, 25) zwei Zylinderzahnräder (99, 100) vorgesehen sind, die das entsprechende Schraub-Mutter-Verbindungsglied (79, 87) mit der Betätigungsübertragungsdrehspindel (78) verbinden;
- im Bereich des zweiten Endes (30, 31) des anderen elastisch verformbaren Glieds (24, 25) zwei Ritzel (95, 96) und eine Kette (97) oder drei Zylinderzahnräder (103, 104, 105) vorgesehen sind, die das entsprechende Schraub-Mutter-Verbindungsglied (79, 87) mit der Betätigungsübertragungsdrehspindel (78) verbinden.

13. Mähmaschine nach irgend einem der Ansprüche 9 bis 12, ***dadurch gekennzeichnet,* dass** jedes Schraub-Mutter-Verbindungsglied (79, 87) ein Schraubglied (80, 88) und ein Mutterglied (81, 89) umfasst, wobei das Schraubglied (80, 88) oder das Mutterglied (81, 89) so mit dem Gestell (2) verbunden ist, dass es sich lediglich drehen kann.

14. Mähmaschine nach Anspruch 13, ***dadurch gekennzeichnet,* dass**
- das Schraubglied (80, 88) aus einer Gewindestange (84, 92) besteht, die ohne Translationsbewegungsmöglichkeit drehbar im Gestell (2) geführt wird,
- das Mutterglied (81, 89) mit dem zweiten Ende (30, 31) des entsprechenden elastisch verformbaren Glieds (24, 25) verbunden ist.

15. Mähmaschine nach irgend einem der Ansprüche 1 bis *14,* ***dadurch gekennzeichnet,* dass** jedes elastisch verformbare Glied (24, 25) mindestens eine zylindrische Schraubenfeder (32, 33) aufweist.

16. Mähmaschine nach Anspruch 15, ***dadurch gekennzeichnet,* dass** es sich bei (der) den zylindrischen Schraubenfeder(n) um eine Zugfeder bzw. Zugfedern (32, 33) handelt.

17. Mähmaschine nach Anspruch 14 und Anspruch 15 oder 16, ***dadurch gekennzeichnet,* dass** das Mutterglied (81, 89) aus einem Anschlag (85, 93) besteht, der in das Ende (30, 31) der (einer der) zylindrischen Schraubenfeder(n) (32, 33) des entsprechenden elastisch verformbaren Glieds (24, 25) geschraubt ist, wobei der Anschlag (85, 93) ein Gewindeloch (86, 94) aufweist, in das die Gewindestange (84, 92) des entsprechenden Schraubglieds (80, 88) geschraubt ist.

18. Mähmaschine nach irgend einem der Ansprüche 1 bis 17 in Kombination mit Anspruch 2, ***dadurch gekennzeichnet,* dass** das Betätigungsdrehglied (76) direkt mit der Betätigungsübertragungsdrehspindel (78) verbunden ist.

19. Mähmaschine nach Anspruch 18, ***dadurch gekennzeichnet,* dass** das Betätigungsdrehglied (76) eine Betätigungsdrehachse (101) aufweist, die mit der Betätigungsübertragungsdrehspindel (78) zumindest im Wesentlichen kollinear ist.

20. Mähmaschine nach Anspruch 19, ***dadurch gekennzeichnet,* dass** die Betätigungsdrehachse (101) und die Betätigungsübertragungsdrehspindel (78) ein einziges Teil bilden.

21. Mähmaschine nach irgend einem der Ansprüche 1 bis 20, ***dadurch gekennzeichnet,* dass** das Betätigungsdrehglied (76) eine Kurbel (102) aufweist, die sich außerhalb des Gestells (2) erstreckt.

22. Mähmaschine nach Anspruch 21, ***dadurch gekennzeichnet,* dass** sich die Kurbel (102) an einem der Längsenden (13, 14) des Gestells (2) erstreckt.

23. Mähmaschine nach Anspruch 22, ***dadurch gekennzeichnet,* dass** sich die Kurbel (102), in Vorschubrichtung während des Betriebs gesehen, am linken Ende (13) des Gestells (2) erstreckt.

24. Mähmaschine nach irgend einem der Ansprüche 1 bis 23, ***dadurch gekennzeichnet,* dass** jedes elastisch verformbare Glied (24, 25) mittels
- einer im Gestell (2) drehbar geführten Kippvorrichtung (38, 59), mit der das erste Ende (28, 29) des elastisch verformbaren Glieds (24, 25) direkt oder indirekt verbunden ist,
- einer sich zwischen der Kippvorrichtung (38, 59) und dem entsprechenden Ende (15, 16) des Erntemechanismus (5) erstreckenden Stange (40, 61) am Erntemechanismus (5) angreift.

25. Mähmaschine nach Anspruch 24, ***dadurch gekennzeichnet,* dass**
- die den Erntemechanismus (5) mit dem Gestell (2) verbindende Aufhängungsvorrichtung (9) insbesondere zwei untere Verbindungsstangen (10, 11) aufweist, die jeweils zwischen einem Ende (15, 16) des Erntemechanismus (5) und dem Gestell (2) angelenkt sind;
- jede Stange (40, 61) an einer Stelle am Erntemechanismus (5) angelenkt ist, so dass die durch die Stangen (40, 61) ausgeübte Zugkraft bezüglich des Gelenks (18, 18') der unteren Verbindungsstangen (10, 11) am Erntemechanismus (5) ein Moment erzeugt, das dazu neigt, den vorderen Teil des Erntemechanismus (5) anzuheben.

26. Mähmaschine nach irgend einem der Ansprüche 1 bis 25, ***dadurch gekennzeichnet,* dass**
- das Gestell (2) einen hohlen Teil (34) enthält, der sich im Betrieb quer zur Vorschubrichtung (22) erstreckt;
- sich die elastisch verformbaren Glieder (24, 25) zumindest im Wesentlichen vollständig im Inneren des hohlen Teils (34) des Gestells (2) erstrecken.
